Europäisches Patentamt

European Patent Office

Office européen des brevets

(19)

(11) Veröffentlichungsnummer: **0 030 324**
**B1**

(12) **EUROPÄISCHE PATENTSCHRIFT**

(45) Veröffentlichungstag der Patentschrift:
26.05.82

(21) Anmeldenummer: 80107382.6

(22) Anmeldetag: 26.11.80

(51) Int. Cl.³: **G 02 B 23/18**, G 02 B 23/06,
G 02 B 7/06

(54) Doppelfernrohr mit einer zweigelenkigen Verbindungsbrücke.

(30) Priorität: 01.12.79 DE 2948421

(43) Veröffentlichungstag der Anmeldung:
17.06.81 Patentblatt 81/24

(45) Bekanntmachung des Hinweises auf die Patenterteilung:
26.05.82 Patentblatt 82/21

(84) Benannte Vertragsstaaten:
AT CH FR GB IT LI

(56) Entgegenhaltungen:
DE-B-1 215 953
FR-A-2 192 321
US-A-4 030 808

(73) Patentinhaber: **Firma Carl Zeiss, Postfach 1369/1380,
D-7082 Oberkochen (DE)**

(72) Erfinder: **Lehrmund, Willi, Weingartenstrasse 21,
D-6337 Leun, Lahn (DE)**
Erfinder: **Altenheiner, Erwin, Fürst-Walrad-Strasse 9,
D-6331 Waldsolms (OT Hasselborn) (DE)**

ACTORUM AG

Doppelfernrohr mit einer zweigelenkigen Verbindungsbrücke

Die vorliegende Erfindung betrifft ein Doppelfernrohr mit einer zweigelenkigen Verbindungsbrücke zwischen den Einzelfernrohren , bei dem in jedem Einzelfernrohr-Gehäuse zur Fokussierung dienende optische Teile von einer innerhalb des Gehäuses axial verstellbaren, gegen Verdrehung gesicherten Halterung umfasst sind, die über einen Steg mit einem in einer der Schwenkachsen geführten, axial verschiebbaren Schwenkachsenstift verbunden ist und bei dem die den beiden Schwenkachsen entsprechenden Schwenkachsenstifte zur gemeinsamen Fokussierung über ein Betätigungsglied zusammen und um gleiche Beträge axial verschiebbar sind.

Bei derartigen Fernrohren ist ausser der gemeinsamen Fokussierung beider Einzelfernrohre eine Fokussierungsmöglichkeit erwünscht, die nur auf ein Einzelfernrohr wirkt und mit deren Hilfe eine Fehlsichtigkeit des Benutzers auf einem Auge ausgeglichen werden kann.

Es ist bekannt bei eingelenkigen Doppelfernrohren an dem dem Auge des Benutzers gewandten Ende der Gelenkbrücke einen Triebknopf für die gemeinsame Fokussierung beider Einzelfernrohre und am anderen Ende der Gelenkbrücke einen weiteren Drehknopf für die Einzelfokussierung vorzusehen. Eine solche Lösung ist auf Doppelfernrohre mit Zweigelenkbrücke nicht übertragbar; sie ist im übrigen auch nicht bedienungsfreundlich.

Aus der DE-PS 22 33 055 ist ein Doppelfernrohr mit Zweigelenkbrücke bekannt, bei dem die gemeinsame Fokussierung beider Einzelfernrohre durch einen in der Verbindungsbrücke angeordneten Triebknopf bewirkt wird und bei dem zur Kompensation eines Augenfehlers des Benutzers ein Okular oder ein Objektiv einzeln verstellbar gestaltet werden kann. Diese Einzelverstellung wird üblicherweise mittels eines Drehringes an einem Einzelfernrohr bewirkt. Abgesehen davon, dass durch die Einzelverstellung eines Okulars oder Objektivs Schwierigkeiten bei der Abdichtung des betreffenden Einzelfernrohres entstehen, ist diese Lösung auch nicht bedienungsfreundlich.

Der vorliegenden Erfindung liegt nun die Aufgabe zugrunde ein Doppelfernrohr mit einer zweigelenkigen Verbindungsbrücke zwischen den Einzelfernrohren so auszubilden, dass sowohl eine gemeinsame Fokussierung als auch eine Einzelfokussierung vom Benutzer vorgenommen werden kann ohne das Fernrohr abzusetzen, und dass bei beiden Fokussierungsvorgängen nur dieselben, jeweils zwischen Okular und Objektiv angeordneten optischen Elemente bewegt werden müssen.

Diese Aufgabe wird bei einem Doppelfernrohr der eingangs geschilderten Art dadurch gelöst, dass auf der dem Beobachter zugewandten Seite auf einer Schwenkachse ein erster Triebknopf und auf der anderen Schwenkachse ein zweiter Triebknopf angeordnet ist, dass der erste Triebknopf über eine Gewindeverbindung formschlüssig mit dem ersten Schwenkachsenstift verbunden ist, der mit einem Fortsatz in eine, in der Verbindungsbrücke axial verschiebbar gelagerte Platte eingreift, dass der zweite Schwenkachsenstift über eine Feder kraftschlüssig mit einer in der Schwenkachse geführten und über die Platte axial verschiebbaren Hülse gekoppelt ist, und dass der zweite Triebknopf über eine, zur Übertragung seiner Drehbewegung dienende, jedoch eine Axialbewegung zulassende Kopplung mit einem Gewindestift verbunden ist, der in der axial verschiebbaren Hülse dreh- und verschiebbar gelagert ist und in eine Gewindehülse im zweiten Schwenkachsenstift eingreift.

Der Benutzer hält ein Doppelfernrohr während der Beobachtung mit beiden Händen, so dass er bei dem Doppelfernrohr nach der vorliegenden Erfindung beide Triebknöpfe ohne Absetzen des Fernrohres in einfacher Weise bedienen kann.

Mit der Drehung des ersten Triebknopfes bewirkt der Benutzer eine gemeinsame Fokussierung, d.h. eine Einstellung des Fernrohres auf eine gewünschte Beobachtungsentfernung. Dabei werden die beiden Schwenkachsenstifte und die damit verbundenen Fokussierungselemente in den beiden Einzelfernrohren gleichzeitig und um gleiche Beträge axial verschoben.

Bei der Betätigung des zweiten Triebknopfes wird alleine der zweite Schwenkachsenstift und das mit ihm verbundene Fokussierungselement axial verschoben. Dabei wird praktisch der Abstand zwischen dem, mit dem zweiten Schwenkachsenstift verbundenen Fokussierungselement und dem zur Übertragung der gemeinsamen Fokussierbewegung dienenden Glied verändert.

Die Erfindung wird im folgenden anhand der ein Ausführungsbeispiel darstellenden Figuren 1–3 der beigefügten Zeichnungen näher erläutert. Dabei zeigen:

Fig. 1 eine Ansicht des Doppelfernrohres im Gebrauchszustand;
Fig. 2 einen Teil-Längsschnitt durch das in Fig. 1 dargestellte Fernrohr;
Fig. 3 eine okularseitige Draufsicht auf das in Fig. 1 gezeigte Fernrohr im zusammengeklappten Verpackungszustand.

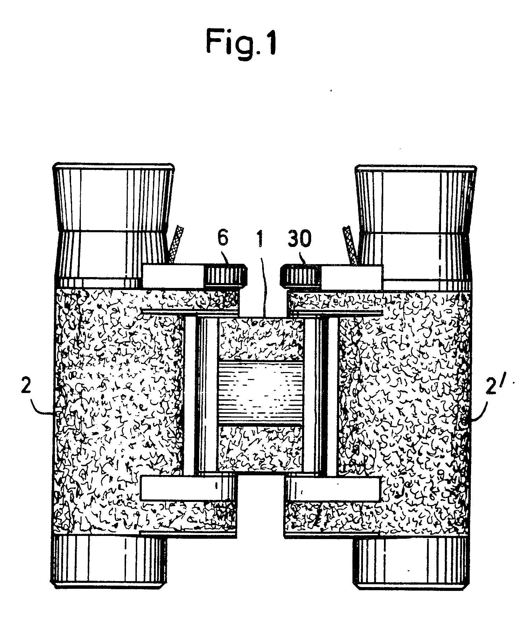

In Fig. 1 sind mit 2 und 2' die Gehäuse zweier Einzelfernrohre bezeichnet, die über eine zweigelenkige Verbindungsbrücke 1 miteinander verbunden sind. Auf einer der Gelenkachsen 12 ist ein Triebknopf 6 angebracht, der zur gemeinsamen Fokussierung der beiden Einzelfernrohre dient. Auf der anderen Gelenkachse 12' ist ein Triebknopf 30 vorgesehen, mit dessen Hilfe eine gesonderte Fokussierung des Einzelfernrohres 2' zum Ausgleich des Augenfehlers des Benutzers vorgenommen wird.

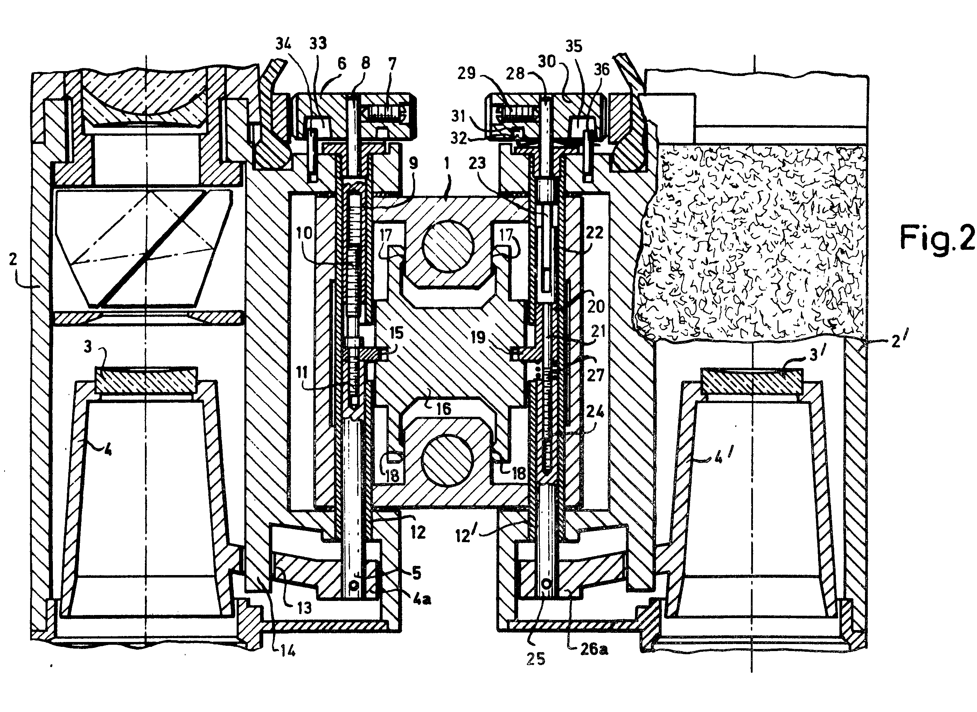

Zur gemeinsamen Fokussierung beider Einzelfernrohre 2,2' werden in diesen jeweils zwischen Objektiv und Okular angeordnete optische Elemente 3 bzw. 3′ gleichzeitig axial verschoben, während zur gesonderten Fokussierung des Einzelfernrohres 2′ nur das in diesem angeordnete Element 3′ axial verschoben wird. Zur weiteren Erläuterung der Wirkungsweise dient Figur 2.

Der Triebknopf 6 ist mittels einer Schraube 7 mit einem Zapfen 8 verbunden, dessen unterer Teil als Hülse 9 mit Innengewinde ausgebildet ist. In diese Hülse ist ein Gewindestift 10 gegen Verdrehung gesichert eingebracht, dessen unteres Ende über die Schraubverbindung 11 fest mit dem ersten Schwenkachsenstift 5 verbunden ist. Dieser Stift ist in der als Hohlwelle 12 ausgebildeten Schwenkachse axial verschiebbar gelagert. Das untere Ende des Schwenkachsenstiftes 5 ist mit einem Steg 4a der Halterung 4 verbunden, die das Fokussierelement 3 trägt. Der Steg 4a ist ferner mit einer Bohrung 13 versehen, in die ein gehäusefester Stift 14 eingreift und damit die Halterung 4 gegen Verdrehen sichert.

Der Schwenkachsenstift 5 ist an seinem oberen Ende mit einem seitlichen Fortsatz 15 versehen, der in eine Ausnehmung des in der Verbindungsbrücke 1 gelagerten Teiles 16 eingreift. Dieses Teil ist über Führungen 17, 18 axial verschiebbar. Auf seiner rechten Seite ist das Teil 16 mit einer Ausnehmung versehen in die ein seitlicher Fortsatz 19 einer Hülse 20 eingreift, die in der als Hohlwelle 12′ ausgebildeten rechten Schwenkachse axial verschiebbar gelagert ist.

Die Hülse 20 ist mit einer Mittenbohrung versehen, in der ein zylindrischer Stift 21 drehbar gelagert ist. Das obere Ende des zylindrischen Stiftes 21, ist als Gabel ausgebildet, in die eine Zunge 23 so eingreift, dass die Gabel gegenüber der Zunge axial verschiebbar ist, dass jedoch bei einer Drehung der Zunge 23 die Gabel 22 und damit der zylindrische Stift 21 mitgedreht werden.

Das untere Ende des zylindrischen Stiftes 21 ist als Gewindestift 24 ausgebildet, der in den als Hülse mit Innengewinde ausgebildeten oberen Teil des zweiten Schwenkachsenstiftes 25 eingreift. Auch dieser Stift ist in der Hohlwelle 12′ axial verschiebbar gelagert.

Das untere Ende des Schwenkachsenstiftes 25 ist mit einem Steg 26a der Halterung 4′ verbunden, die das Fokussierungselement 3′ trägt.

Zur kraftschlüssigen Verbindung der axial verschiebbaren Hülse 20 mit dem Schwenkachsenstift 25 ist zwischen beiden eine Feder 27 vorgesehen.

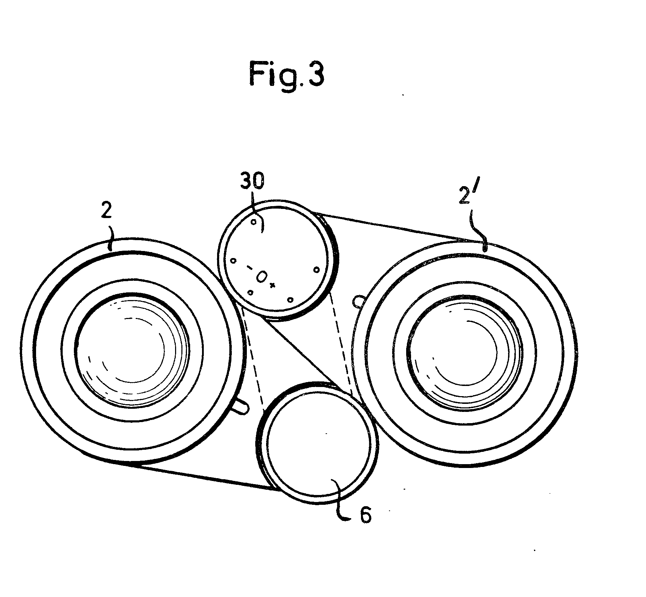

Die in die Gabel 22 eingreifende Zunge 23 ist Teil eines Zapfens 28, der über eine Schraube 29 fest mit dem Triebknopf 30 verbunden ist. Der Triebknopf 30 ist mit einer Ausnehmung 31 versehen, in die ein federnd gelagertes Rastelement 32 eingreift und damit die Nullstellung des Triebknopfs 30 markiert. Diese Nullstellung ist, wie Figur 3 zeigt, auf der Oberseite des Triebknopfes 30 markiert, die auch noch eine Dioptrien-Skala trägt.

Die Triebknöpfe 6 und 30 sind mit sektorförmigen Ausnehmungen 33 und 35 versehen, in die gehäusefeste Stifte 34 und 36 eingreifen, welche als Anschlag dienen und damit den Drehbereich der Triebknöpfe begrenzen.

Zur gemeinsamen Fokussierung der beiden Einzelfernrohre 2,2′ wird der Triebknopf 6 gedreht. Damit wird auch die Gewindehülse 9 gedreht, so dass sich der Gewindestift 10 axial verschiebt. Dieser nimmt den Schwenkachsenstift 5 und damit über den Steg 4a das Fokussierelement 3 mit. Die Axialwegung des Schwenkachsenstiftes 5 wird über einen seitlichen Fortsatz 15 auf das Teil 16 übertragen, das damit in der Brücke 1 axial verschoben wird. Es nimmt dabei über den seitlichen Fortsatz 19 die Hülse 20 in der rechten Schwenkachse 12′ mit. Wird die Hülse 20 über die Platte 16 abwärts bewegt, so nimmt sie über die Feder 27 den Schwenkachsenstift 25 und damit das Fokussierelement 3′ mit. Wird die Hülse 20 aufwärts bewegt, so wird der Schwenkachsenstift 25 über den Gewindestift 24 mitgenommen, wobei die Feder 27 dafür sorgt, dass das obere Ende der Hülse 20 und das untere Ende der Gabel 22 in Kontakt bleiben.

Bei Drehung des Triebknopfes 6 werden also in den Einzelfernrohren 2,2′ die Fokussierelemente 3,3′ gemeinsam und um gleiche Beträge axial verschoben.

Zur Einzelfokussierung wird der Triebknopf 30 gedreht. Dabei wird auch der Zapfen 28, die mit ihm verbundene Zunge 23 und damit die Gabel 22 gedreht. Damit dreht sich der Gewindestift 24 in der Gewindehülse des Schwenkachsenstiftes 25 und verändert dabei den Abstand zwischen der Hülse 20 und dem Schwenkachsenstift 25, wobei die Feder 27 stets für eine kraftschlüssige Verbindung sorgt.

Bei Drehung des Triebknopfes 30 wird also alleine das Fokussierelement 3′ im Einzelfernrohr 2′ axial verschoben, so dass damit ein Ausgleich des Augenfehlers des Benutzers erfolgt.

**Patentansprüche**

1. Doppelfernrohr mit einer zweigelenkigen Verbindungsbrücke (1) zwischen den Einzelfernrohren (2,2′), bei dem in jedem Einzelfernrohr-Gehäuse zur Fokussierung dienende optische Teile (3,3′) von einer innerhalb des Gehäuses axial verstellbaren, gegen Verdrehung gesicherten Halterung (4,4′) umfasst sind, die über einen Steg (4a, 26a) mit einem in einer der Schwenkachsen (12, 12′) geführten, axial verschiebbaren Schwenkachsenstift (5, 25) verbunden ist und bei dem die den beiden Schwenkachsen entsprechenden Schwenkachsenstifte zur gemeinsamen Fokussierung über ein Betätigungsglied (6) zusammen um gleiche Beträge axial verschoben werden, dadurch gekennzeichnet, dass auf der dem Beobachter zugewandten Seite einer Schwenkachse (12) ein erster Triebknopf (6) und auf der anderen Schwenkachse (12′) ein zweiter Triebknopf (30) angeordnet ist, dass der erste Triebknopf (6) über eine Gewindeverbindung (9, 10, 11) formschlüssig mit dem ersten Schwenkachsenstift (5) verbunden ist, der mit einem Fortsatz (15) in eine in der Verbindungsbrücke (1) axial verschiebbar gelagerte Platte (16) eingreift, dass der zweite Schwenkachsenstift (25) über eine Feder (27) kraftschlüssig mit einer in der Schwenkachse (12') geführten und über die Platte (16) axial verschiebbaren Hülse (20) gekoppelt ist, und dass der zweite Triebknopf (30) über eine zur Übertragung seiner Drehbewegung dienende, jedoch eine Axialbewegung zulassende Kupplung (22, 23) mit einem Gewindestift (24) verbunden ist, der in der Hülse (20) dreh- und verschiebbar gelagert ist und in eine Gewindehülse im zweiten Schwenkachsenstift (25) eingreift.

2. Doppelfernrohr nach Anspruch 1, dadurch gekennzeichnet, dass der zweite Triebknopf (30) mit einem Stift (28) fest verbunden ist, dessen unteres Ende als Zunge (23) ausgebildet ist, und dass der in den zweiten Schwenkachsenstift (25) eingreifende Gewindestift (24) an seinem oberen Ende als Gabel (22) ausgebildet ist, die die Zunge (23) axial verschiebbar, jedoch bezüglich deren Drehung fest gekoppelt umschliesst.

3. Doppelfernrohr nach Anspruch 1, dadurch gekennzeichnet, dass der zweite Triebknopf (30) mit einer Ausnehmung (31) versehen ist, in die eine zur Fixierung der Nullposition dienende Rast (32) federnd eingreift.

**Claims**

1. A binocular telescope having a double-joint connecting bridge (1) between the individual telescopes (2, 2') in which optical parts (3, 3') serving for focusing in each individual telescope housing are held by a mount (4, 4') which is axially displaceable but secured against turning within the housing, the mount being connected via an arm (4a, 26a) with a swivel shaft pin (5, 25) which is axially displaceable and guided in one of the swivel shafts (12, 12') and in connection with which the swivel shaft pins corresponding to the two swivel shafts are displaced axially together by equal amounts for joint focusing via an actuating member (6), characterized by the fact that on the side of one swivel shaft (12) facing the observer a first drive knob (6) is arranged while on the other swivel shaft (12') a second drive knob (30) is arranged, that the first drive knob (6) is connected via a threaded connection (9, 10, 11) in form-locked manner with the first swivel shaft pin (5) which via an extension (15) engages into a plate (16) which is supported in axially displaceable manner in the connecting bridge (1), that the second swivel shaft pin (25) is coupled via a spring (27) in force-locked manner with a sleeve (20) which is guided in the swivel shaft (12) and is axially displaceable by the plate (16), and that the second drive knob (30) is connected via a coupling (22, 23), which serves for the transmission of its rotary movement but permits axial movement, with a threaded pin (24) which is supported in turnable and displaceable manner in the sleeve (20) and engages into a threaded sleeve in the second swivel shaft pin (25).

2. A binocular telescope according to claim 1, characterized by the fact that the second drive knob (30) is permanently connected to a pin (28) whose lower end is developed as tongue (23), and that the threaded pin (24) which engages in the second swivel shaft pin (25) is developed at its upper end as a fork (22) which surrounds the tongue (23) in axially displaceable manner but firmly coupled with respect to the rotation thereof.

3. A binocular telescope according to claim 1, characterized by the fact that the second drive knob (30) is provided with a recess (31) into which a detent (32) serving to fix the zero position engages under spring action.

**Revendications**

1. Jumelle dont les deux lunettes sont réunies entre elles par un pont de jonction, du genre dans lequel, dans le boîtier de chaque lunette, un système optique servant à la mise au point est monté dans un support qui est déplaçable axialement à l'intérieur du boîtier qui empêche de tourner, et qui est relié par une traverse à une tige d'articulation et déplaçable axialement et guidée dans l'axe d'articulation de la lunette sur le pont de jonction et du genre dans lequel les tiges d'articulation correspondant aux deux axes d'articulation sont déplacées ensemble axialement de la même quantité au moyen d'un organe d'actionnement permettant la mise au point d'ensemble, caractérisée en ce que, du côté tourné vers l'utilisateur, un premier bouton de réglage (6) est monté sur l'un des axes d'articulation (12) et un second bouton de réglage (30) est monté sur l'autre axe d'articulation (12'), en ce que le premier bouton de réglage (6) est relié mécaniquement par une liaison à filetage (9, 10, 11) à la première tige d'articulation (5) qui est en prise par un prolongement (15) avec une plaque (16) déplaçable axialement dans le pont de jonction (1), en ce que la seconde tige d'articulation (25) est accouplée positivement par l'intermédiaire d'un ressort (27) à un manchon (20) qui est guidé dans l'axe d'articulation (12) et qui est déplaçable axialement au moyen de la plaque (16), et en ce que le second bouton de réglage (30) est relié à une tige filetée (24) par l'intermédiaire d'un accouplement (22, 23) qui sert à transmettre ses mouvements de rotation et qui autorise les déplacements axiaux, ladite tige filetée (24) étant montée dans le manchon (20) de manière à pouvoir tourner et se déplacer axialement et étant en prise avec un manchon fileté ménagé dans la seconde tige d'articulation (25).

2. Jumelle selon la revendication 1, caractérisée en ce que le second bouton de réglage (30) est solidaire d'une tige (28) dont l'extrémité inférieure est réalisée sous la fourme d'une languette (23), et en ce que la tige filetée (24) qui est en prise avec la seconde tige d'articulation (25) est réalisée à son extrémité supérieure sous la forme d'une fourchette (22) qui enserre la languette (23) de manière à pouvoir se déplacer axialement et à assurer un accouplement positif par rapport aux rotations.

3. Jumelle selon la revendication 1, caractérisée en ce que le second bouton de réglage (30) présente un évidement (31) dans lequel pénètre élastiquement un cran d'arrêt (32) servant à la fixation de la position zéro.

# Fig.1

Fig.2

0 030 324

# Fig.3